# EUROPÄISCHE PATENTSCHRIFT

(11) **EP 3 785 526 B1**
(45) Veröffentlichungstag und Bekanntmachung des Hinweises auf die Patenterteilung: **07.09.2022**
(21) Anmeldenummer: 20188329.5
(22) Anmeldetag: 29.07.2020
(51) Int. Cl.: A01G 27/02, A01G 31/02

(54) **PFLANZENKULTIVIERUNGSSYSTEM**
PLANT CULTIVATION SYSTEM
SYSTÈME DE CULTURE VÉGÉTALE

(30) Priorität: 26.08.2019 DE 102019212733
(43) Veröffentlichungstag der Anmeldung: 03.03.2021
(73) Patentinhaber: BSH Hausgeräte GmbH, 81739 München (DE)
(72) Erfinder: Blatnik, Gregor, 2381 Podgorje (SI); Dornik, Primoz, 3270 Lasko (SI); Holcinger, Tadej, 3220 Store (SI); Leng, Sascha, 80339 München (DE); Longhino, Werner, 84561 Mehring (DE); Pacnik, Roman, 2383 Smartno pri Slovenj Gradcu (SI); Scheffelmeier, Marco, 80687 München (DE); Tan, E-Lin, 85591 Vaterstetten (DE); Terrádez Alemany, Maria, 80469 München (DE)

(56) Entgegenhaltungen:
- US-A1- 2007 271 842
- US-A1- 2009 151 248
- US-A1- 2018 007 848

## Beschreibung

Die Erfindung betrifft ein Pflanzenkultivierungssystem.

Aus dem Stand der Technik, wie zum Beispiel US 2007/0271842 A1, US 2009/0151248 A1 und US 2018/0007848 A1, sind so genannte "Smart Indoor Gardening"-Systeme bzw.

Pflanzenkultivierungssysteme hinlänglich bekannt, mit denen sich zur küchenmäßigen Verwertung vorgesehene Pflanzen, wie zum Beispiel Salat, Kresse, Kräuter, Gewürzpflanzen etc. in Innenräumen auf optimierte Art und Weise heranziehen lassen.

Bei diesen vorbekannten Pflanzenkultivierungssystemen werden vorkonfektionierte Kapseln mit einem Pflanzenzuchtsubstrat in einen Träger eingesetzt, der wiederum in einem Behälter mit Wasser zur Bewässerung aufnehmbar ist. Zwischen dem Kapselträger und dem Behälter ist in der Regel eine Schale zur Regulierung der Bewässerung vorgesehen. Oberhalb des Behälters ist eine höhenverstellbare, deckelartige Beleuchtungseinheit zur Bestrahlung der Kapseln mit Licht angeordnet. Das Licht weist für jede Wachstumsphase eine optimal angepasste spektrale Zusammensetzung auf. Der Behälter verfügt ferner über eine bevorzugt elektrische Pumpeinheit zur regelbaren Versorgung der Kapseln mit Wasser. Das Wasser wird im Allgemeinen noch mit Nährstoffen zur Verbesserung des Ernteertrags versetzt. Der Behälter mit der darin integrierten Pumpeinheit weist im Allgemeinen einen schnurgebundenen Stromanschluss sowie vielfach ein Funkmodul zum drahtlosen Informationsaustausch mit einem mobilen Endgerät, wie einem Smartphone, auf. Zur Optimierung und Überwachung der Wachstumsprozesse der aus den Kapseln mit dem Pflanzenzuchtsubtrat entstehenden Pflanzen sind derartige Pflanzenkultivierungssysteme mit einer Vielzahl von Sensorelementen, wie zum Beispiel Füllstandssensoren, Feuchtigkeitssensoren, Temperatursensoren, und zudem vielfach mit mindestens einer elektronischen Kamera ausgerüstet. Eine Beleuchtungseinrichtung kann bis in die Nähe der Kapseln abgesenkt werden, um eine vor äußeren Einflüssen geschützte Keimkammer zu schaffen. Darüber hinaus kann eine Heizeinrichtung zur Verbesserung der Wachstumsbedingungen wärmeliebender Pflanzen vorgesehen sein.

Ein Nachteil der vorbekannten Pflanzenkultivierungssysteme ist in dem festen, schnurgebundenen Stromanschluss des Behälters zur Wasserversorgung zu sehen, wodurch eine gründliche Reinigung, zum Beispiel mittels eines Geschirrspülers, praktisch unmöglich ist. Es ist zudem keine Trennung der wasserführenden Komponenten von elektrischen Bauteilen vorgesehen.

Eine Aufgabe der Erfindung ist es daher, ein Pflanzenkultivierungssystem zu schaffen, das sich unter anderem auf besonders einfache Art und Weise reinigen lässt.

Die Erfindung betrifft ein Pflanzenkultivierungssystem gemäß unabhängigen Anspruch 1.

Hierdurch ist eine einfache Reinigung der wasserführenden Bauteile des Pflanzenkultivierungssystems, also des Bewässerungsgefäßes, der Schale und des Kapselhalters, beispielsweise mittels eines haushaltsüblichen Geschirrspülers möglich. Der Zugang zu den gezüchteten Pflanzen zum Ernten und Servieren wird durch das von der Dockingstation leicht abnehmbare Bewässerungsgefäß beträchtlich vereinfacht. Ferner ist keine Netztrennung mehr notwendig, wenn das Bewässerungsgefäß von einem Anwender an einen anderen Ort verbracht werden soll. Alle spannungsführenden Komponenten des Pflanzenkultivierungssystems sind zudem optimal von wasserführenden Bauteilen separiert. Als Stromnetz wird im Kontext der vorliegenden Beschreibung das öffentliche Wechselstromnetz mit 230 Volt Nennspannung verstanden. Der Begriff Wasser definiert im Kontext der vorliegenden Beschreibung kein chemisch reines Wasser sondern vielmehr Leitungswasser, das zusätzlich mit Nährstoffen zur Förderung des Pflanzenwachstums versetzt ist.

Vorzugsweise ist die elektrische Pumpeinheit lösbar mit dem Bewässerungsgefäß verbindbar.

Hierdurch lässt sich das Bewässerungsgefäß besonders leicht säubern und ist insbesondere spülmaschinentauglich. Die mechanische Verbindung zwischen der Pumpeinheit und dem Bewässerungsgefäß kann zum Beispiel mittels einer Bajonettverbindung, einer Schraubverbindung oder einer Magnetverbindung realisiert sein. In die Pumpeinheit kann mindestens ein Sensorelement, wie zum Beispiel ein Füllstandssensor, ein Temperatursensor, ein Feuchtigkeitssensor, ein Durchflussmengensensor etc. und/oder eine elektrische Energiespeichereinheit, wie ein Akkumulator, ein Kondensator oder dergleichen, integriert sein.

Bei einer technisch vorteilhaften Ausgestaltung ist die Dockingstation mit einer mit Hilfe von Distanzstücken höhenvariablen Vertikalstütze verbindbar, an deren freien Ende ein Deckelelement mit mindestens einer Lampe zur Beleuchtung der mindestens einen Kapsel mit dem Pflanzenzuchtsubstrat vorgesehen ist.

Hierdurch kann die senkrechte Aufbauhöhe des Deckelelements dem stetigen Höhenwachstum der in den Kapseln heranzuziehenden Pflanzen angepasst werden. Das Vertikalelement ist erforderlichenfalls mittels einer Halterung stationär an einer Wand, einem Möbelstück oder dergleichen fixierbar. Die Distanzelemente sind bevorzugt rast- und steckbar ausgebildet.

Bevorzugt ist das Deckelelement dazu eingerichtet, in einem zumindest teilweise auf die Schale abgesenkten Zustand einen radial auskragenden Rand der Schale zumindest teilweise abzudecken oder zu überspannen.

Hierdurch lässt sich zum Beispiel in einer Keimphase der Pflanzenzuchtsubstrate eine weitgehend vor nachteiligen Außeneinflüssen geschützte abgeschlossene Wachstumskammer ausbilden. Zur optimalen Kontrolle des Keimprozesses im abgesenkten Zustand ist ein umlaufender Randbereich des Deckelelements durchsichtig ausgeführt.

Im Fall einer weiteren Ausgestaltung verbleibt zwischen dem radial auskragenden Rand der Schale und dem Kapselhalter ein Ringspalt. Hierdurch kann der Anwender Wasser seitlich, zum Beispiel mit Hilfe einer Gießkanne oder dergleichen, in die Schale nachfüllen, wobei das Wasser selbsttätig von der Schale in das darunter befindliche Bewässerungsgefäß abfließt. Das Bewässerungsgefäß kann zum Vermeiden einer Überbefüllung mit Wasser eine Füllstandsanzeige aufweisen.

Bei einer vorteilhaften Weiterbildung ist vorgesehen, dass das Anschlusskabel mindestens eine Elektronikeinheit aufweist, die zumindest zur Steuerung und/oder Regelung der Pumpeinheit und der Lampe ausgebildet ist.

Infolgedessen lassen sich umfangreiche elektronische Funktionalitäten räumlich beabstandet zu der Dockingstation mit dem auf diese aufgesetzten Bewässerungsgefäß realisieren. Die Bewässerung der Kapseln mit dem Pflanzenzuchtsubstrat kann zum Beispiel durch geeignetes periodisches Aktivieren der Pumpeinheit mit Hilfe der Elektronikeinheit in Abhängigkeit vom jeweiligen Wasserbedarf des heranzuziehenden Pflanzentyps erfolgen.

Bevorzugt weist die Elektronikeinheit mindestens ein Netzteil auf. Hierdurch ist eine zentrale Versorgung des Pflanzenkultivierungssystems mit der betriebsnotwendigen elektrischen Energie gewährleistet.

Vorzugsweise weist die Elektronikeinheit eine Datenverarbeitungseinheit sowie mindestens eine Kommunikationseinheit auf, die insbesondere zum drahtlosen Informationsaustausch mit einem externen Mobilgerät, wie einem Smartphone, Tablet oder dergleichen, ausgebildet ist.

Hierdurch lassen sich umfangreiche Regelungs- und Überwachungsfunktionalitäten umsetzen, die ein so genanntes "Smart Indoor Gardening" -Erlebnis für den Anwender möglich machen.

Bei einer weiteren technisch vorteilhaften Fortbildung ist vorgesehen, dass zwischen der kontaktlosen Dockingstation und dem Bewässerungsgefäß im auf die Dockingstation aufgesetzten Zustand des Bewässerungsgefäßes eine bevorzugt drahtlose Verbindung besteht.

Hierdurch können sämtliche Komponenten des Pflanzenkultivierungssystems mit Ausnahme der Dockingstation und dem Deckelelement mit der darin integrierten Lampe, problemlos, insbesondere in einem Geschirrspüler, gründlich gereinigt werden. Aufgrund der drahtlosen Verbindung wird eine Korrosion von ansonsten notwendigen, elektrischen Kontaktelementen vermieden.

Im Fall einer günstigen Ausgestaltung ist die bevorzugt drahtlose Verbindung mittels einer induktiven Kopplung realisiert.

Mittels der induktiven Kopplung lässt sich zumindest die für den Betrieb der Pumpeinheit notwendige elektrische Energie in das Bewässerungsgefäß übertragen. Die bevorzugt mit möglichst energieeffizienten LED's ausgeführte Lampe im Deckel wird hingegen bevorzugt direkt über elektrische Leitungen vom Netzteil der Elektronikeinheit gespeist. Mit Hilfe einer optionalen optischen Kopplung lassen sich zudem gegebenenfalls Daten von Sensorelementen, die zum Beispiel in die Pumpeinheit integriert sind, bevorzugt bidirektional mit der in das Anschlusskabel integrierten Elektronikeinheit austauschen.

Bevorzugt ist in die Elektronikeinheit eine Bedieneinheit integriert.

Hierdurch ist eine ergonomisch vorteilhafte, da zum Bewässerungsgefäß räumlich beabstandete Bedienung des Pflanzenkultivierungssystems durch den Anwender möglich. Die Bedieneinheit enthält bevorzugt konventionelle physische Bedienelemente, wie Taster, Folientaster, Drucktasten, Hebelschalter, Drehschalter, Wippschalter sowie eine optionale, ggfls. grafikfähige Anzeigeeinheit. Alternativ oder zusätzlich kann die Bedieneinheit einen berührungsempfindlichen Bildschirm bzw. einen so genannten Touchscreen umfassen.

Bei einer technisch vorteilhaften Ausgestaltung weist die Pumpeinheit mindestens ein Sensorelement auf, dessen Sensordaten mittels der induktiven Kopplung und/oder einer optischen Kopplung zwischen der Pumpeinheit und der Dockingstation sowie eines ersten Abschnitts des Anschlusskabels an die Elektronikeinheit übertragbar sind.

Hierdurch kann die Elektronikeinheit beispielsweise einen Füllstand von Wasser innerhalb des Bewässerungsgefäßes erfassen.

Im Folgenden wird ein bevorzugtes Ausführungsbeispiel der Erfindung anhand von schematischen Figuren näher erläutert.

Es zeigen
- **Figur 1**: eine vertikal auseinander gezogene perspektivische Ansicht von Einzelkomponenten eines erfindungsgemäßen Pflanzenkultivierungssystems,
- **Figur 2**: eine perspektivische Ansicht des montierten Pflanzenkultivierungssystems von Fig. 1 mit einem von der kontaktlosen Dockingstation abgehobenen Bewässerungsgefäß, und
- **Figur 3**: einen Längsschnitt des Pflanzenkultivierungssystems von Fig. 1 und 2 mit auf die Dockingstation ausgesetztem Bewässerungsgefäß.

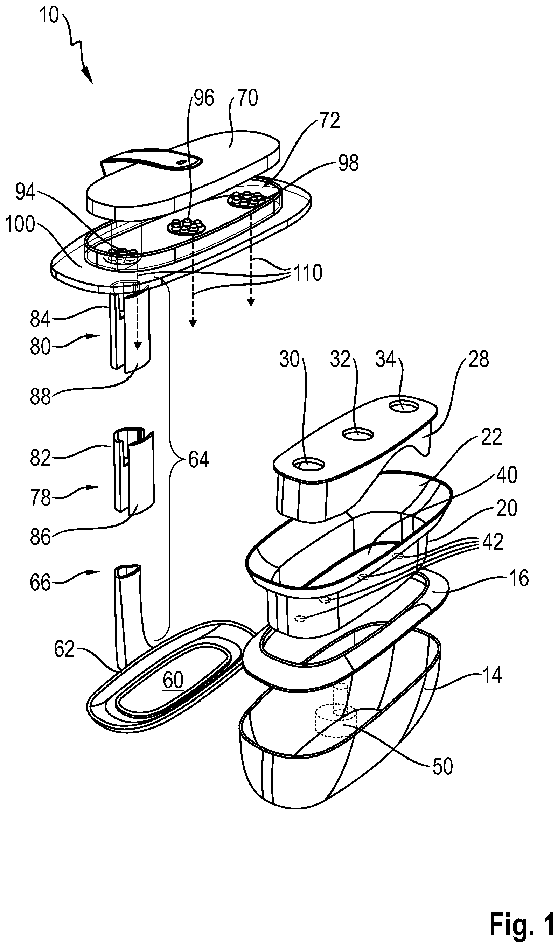

Die **Figur 1** zeigt eine vertikal auseinander gezogene perspektivische Ansicht von Einzelkomponenten eines erfindungsgemäßen Pflanzenkultivierungssystems.

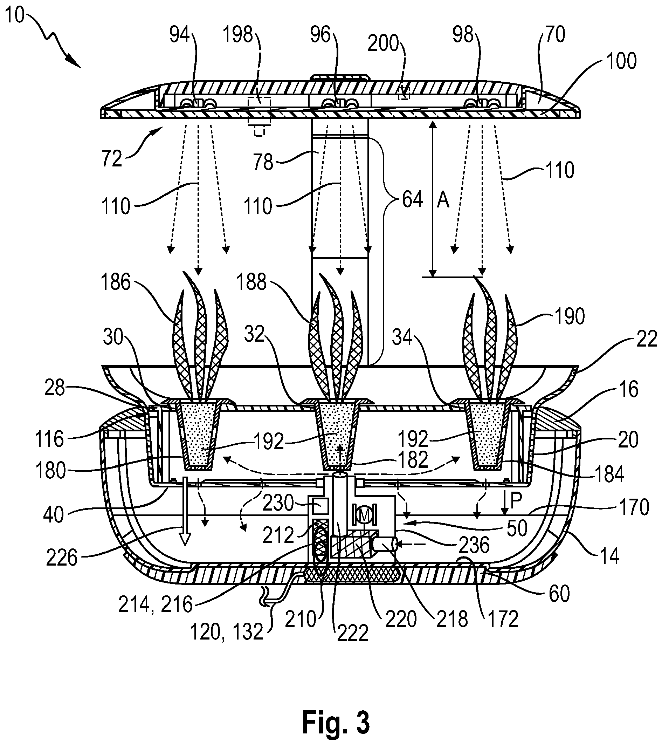

Ein Pflanzenkultivierungssystem 10 umfasst unter anderem ein Bewässerungsgefäß 14, das mit einem umlaufenden, radial einwärts gerichteten Blendrahmen 16 verbindbar ist, eine Schale 20 mit einem radial auskragenden Rand 22 sowie einen Kapselhalter 28 mit hier lediglich exemplarisch drei kreisrunden Ausnehmungen 30, 32, 34. In die Ausnehmungen 30, 32, 34 ist jeweils eine hier nicht dargestellte Kapsel mit einem Pflanzenzuchtsubstrat einsetzbar, das die mittels des Pflanzenkultivierungssystems heranzuziehenden Pflanzen enthält (vgl. Fig. 3).

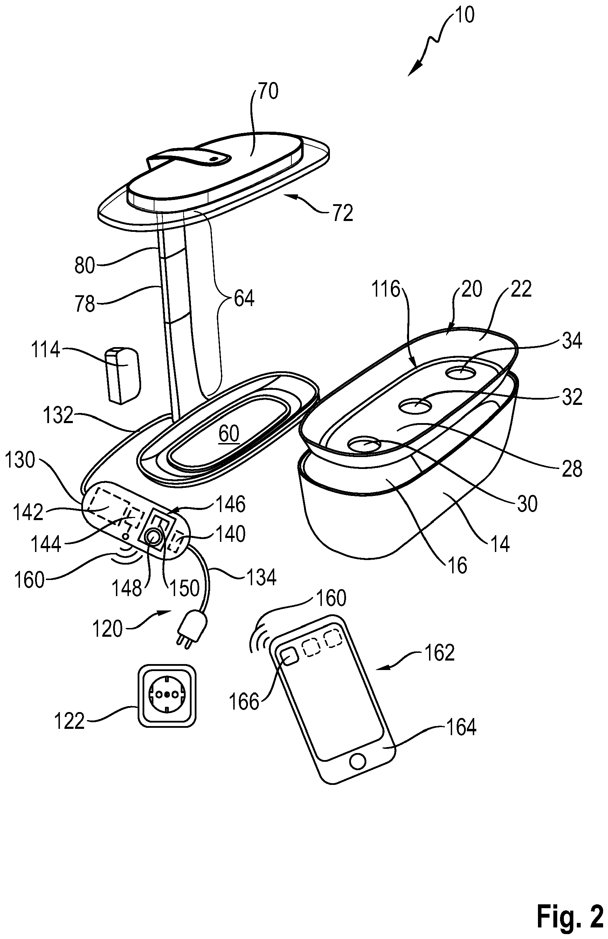

In das Bewässerungsgefäß 14 mit aufgesetztem Blendrahmen 16 ist die Schale 20 einsetzbar, in die wiederum der Kapselhalter einbringbar ist (vgl., insb. Fig. 2). Ein Boden 40 der Schale 20 weist hier beispielhaft vier Bodenöffnungen 42 auf, durch die in der Schale befindliches, hier nicht dargestelltes Wasser schwerkraftbedingt selbsttätig in das Bewässerungsgefäß 14 zurückfließen kann.

Darüber hinaus ist in dem Bewässerungsgefäß 14 eine zeichnerisch hier nur angedeutete elektrische Pumpeinheit 50 lösbar, zum Bespiel mittels einer Bajonettverbindung oder dergleichen, befestigt. Mittels der Pumpeinheit 50 kann in dem Bewässerungsgefäß 14 bevorratetes Wasser in die Schale 20 hinauf gefördert werden, das von dort über die Bodenöffnungen 42 durch die Wirkung der Schwerkraft wieder in das Bewässerungsgefäß zurückfließen kann.

Weiterhin umfasst das Pflanzenkultivierungssystem 10 eine schalenförmige, kontaktlose Dockingstation 60 mit einer an einer Längsseite 62 der Dockingstation 60 ausgebildeten Vertikalstütze 64, an deren freien Ende 66 ein Deckelelement 70 mit einer Lampe 72 direkt oder indirekt unter Zwischenschaltung von hier lediglich exemplarisch zwei dargestellten Distanzstücken 78, 80 befestigbar ist. Jedes der beiden Distanzstücke 78, 80 weist ein Rückenelement 82, 84 auf, das jeweils mit einem dekorativen, vorderseitigen Verkleidungselement 86, 88 bevorzugt rastweise verbindbar ist. Mittels der rastend-steckbaren Distanzstücke 78, 80 lässt sich die Aufbauhöhe der Vertikalstütze 64 und damit ein vertikaler Abstand der Lampe 72 zu dem Kapselhalter 28 und den darin aufgenommenen Kapseln mit dem Pflanzenzuchtsubstrat auf einfache Art und Weise dem aktuellen Höhenwachstum der zu kultivierenden Pflanzen anpassen.

Die Lampe 72 ist hier lediglich exemplarisch mit drei LED-Clustern 94, 96, 98 zur Beleuchtung bzw. zur Bestrahlung der zu kultivierenden Pflanzen gebildet. Die LED-Cluster 94, 96, 98 umfassen jeweils eine Vielzahl, der besseren zeichnerischen Übersicht halber jedoch nicht bezeichnete, hocheffiziente LED's. Die drei LED-Cluster 94, 96, 98 sind in einer lichtdurchlässigen Deckplatte 100 montiert, die unterseitig mit dem Deckelelement 70 bevorzugt rastend verbindbar ist. Mittels der drei LED-Cluster 94, 96, 98 lässt sich bevorzugt Licht 110 mit einer an die jeweilige Wachstumsphase der in den Pflanzenzuchtsubstraten der Kapseln heranwachsenden Pflanzen optimal angepassten Wellenlänge erzeugen. Jeder LED-Cluster 94, 96, 98 kann hierbei jeweils genau einer Ausnehmung 30, 32, 34 des Kapselhalters 28 zugeordnet sein, so dass gegebenenfalls die Beleuchtungsintensität, die Beleuchtungsdauer, die Beleuchtungszeit und/oder die spektrale Zusammensetzung des von den LED-Clustern 94, 96, 98 emittierten Lichts 110 jeweils individuell sowie automatisch an unterschiedliche Pflanzenzuchtsubstrate unterschiedlicher Pflanzentypen anpassbar ist. Infolgedessen lassen sich mittels des Pflanzenkultivierungssystems 10 optimale Wachstumsergebnisse erzielen.

Das Deckelelement 70 ist bevorzugt dazu ausgebildet, in einem zumindest teilweise auf die Schale 20 abgesenkten Zustand, das heißt auf die Vertikalstütze 64 ist kein Distanzstück 78, 80 aufgesteckt, den radial auskragenden Rand 22 der Schale 20 zumindest teilweise schirmartig abzudecken oder zu überspannen. Infolgedessen kann in einer Keimungsphase der heranzuziehenden Pflanzen ein vor schädlichen Umgebungseinflüssen, Zug oder Kälte, weitestgehend geschützter Keimraum geschaffen werden.

Die **Fig. 2** illustriert eine perspektivische Ansicht des montierten Pflanzenkultivierungssystems von Fig. 1 mit einem von der kontaktlosen Dockingstation abgehobenen Bewässerungsgefäß.

Der Blendrahmen 16 ist mit dem Bewässerungsgefäß 14 verbunden und der radial auskragende Rand 22 liegt auf dem Blendrahmen 16 des Bewässerungsgefäßes 14 auf bzw. die Schale 20 ist in das Bewässerungsgefäß 14 eingesetzt. In die Schale 20 ist wiederum der Kapselhalter 28 mit den drei Ausnehmungen 30, 32, 34 eingesetzt. Das Bewässerungsgefäß 14 mit den vorstehend erwähnten konstruktiven Komponenten ist von der kontaktlosen Dockingstation 60 abgehoben und zur Seite gestellt.

Die Dockingstation 60 ist mittels der höhenangepassten Vertikalstütze 64 unter Verwendung der zwei Distanzstücke 78, 80 mit dem die hier jedoch verdeckte Lampe 72 tragenden Deckelelement 70 verbunden, wobei das Distanzstück 78 mit der Vertikalstütze 64 und das weitere Distanzstück 80 seinerseits mit dem Distanzstück 78 und dem Deckelelement 70 verbunden ist.

Die Vertikalstütze 64 des Pflanzenkultivierungssystems 10 ist im Bedarfsfall mittels einer optionalen Halterung 114 stationär an einer Wand, einem Möbelstück oder dergleichen fixierbar. Die Halterung 114 kann zu diesem Zweck beispielsweise mithilfe von nicht dargestellten Befestigungselementen an der Wand, dem Möbelstück oder dergleichen fixiert werden, während die mechanische Anbindung der Vertikalstütze 64 an der Halterung 114 rastend, klemmend oder magnetisch erfolgen kann. Zwischen dem radial auskragenden Rand 22 der Schale 20 und dem Kapselhalter 28 verbleibt, auch wenn der Kapselhalter in die Schale 20, wie hier gezeigt, eingesetzt ist, ein hinreichend breiter, umlaufender Ringspalt 116, durch den ein Benutzer bzw. ein Anwender beispielsweise mittels einer Gießkanne auf einfache Art und Weise Wasser in die Schale 20 einfüllen kann. Hierbei gelangt das Wasser durch die Bodenöffnungen der Schale aufgrund der Wirkung der Schwerkraft von allein in das Bewässerungsgefäß 14. Um bei diesem Vorgang eine Überbefüllung des Bewässerungsgefäßes 14 zu vermeiden, kann dieses über einen nicht dargestellten, bevorzugt mechanischen Füllstandsanzeiger verfügen. Dieser Füllstandsanzeiger kann beispielsweise mit einem in einem Röhrchen geführten und farblich markierten Auftriebskörper realisiert sein, wobei zu berücksichtigen ist, dass sich der Füllstand des Wassers im Bewässerungsgefäß 14 aufgrund der hier verdeckten, bevorzugt jeweils eine geringe Querschnittsgeometrie aufweisenden Bodenöffnungen Schale 20 zeitlich verzögert erhöht.

Die Dockingstation 60 ist mittels eines elektrischen Anschlusskabels 120 mit dem Stromnetz 122 bzw. dem öffentlichen Wechselstromnetz verbindbar. Das elektrische Anschlusskabel 120 weist bevorzugt mindestens eine kompakte Elektronikeinheit 130 auf, die hier beispielhaft in dem Anschlusskabel 120 positioniert ist, wodurch ein dockingstationsseitiger, erster Abschnitt 132 bzw. Niederspannungsabschnitt und ein stromnetzseitiger, zweiter Abschnitt 134 des elektrischen Anschlusskabels 120 entstehen. Die Elektronikeinheit 130 weist hier näherungsweise die Gehäusebauform eines konventionellen Schnurschalters auf und ist zumindest zur Steuerung und/oder Regelung der hier verdeckten Pumpeinheit sowie der Lampe 72 ausgebildet.

Zu diesem Zweck weist die Elektronikeinheit 130 ein Netzteil 140 zur Anpassung der elektrischen Spannung des Stromnetzes 122 an die von der Elektronikeinheit 130 im Allgemeinen benötigte elektrische (Nieder-)Gleichspannung, eine leistungsfähige digitale elektronische Datenverarbeitungseinheit 142 sowie mindestens eine Kommunikationseinheit 144 zum drahtlosen Informationsaustausch auf. Die Kommunikationseinheit 144 kann zum Beispiel mittels einer Funkverbindung 160 nach dem WLAN-Standard oder dem Bluetooth^{®}-Standard mit einem externen Mobilgerät 162, wie einem Smartphone 164, einem Tablet, einem PC oder dergleichen, drahtlos alle wesentlichen Informationen austauschen, die das Pflanzenkultivierungssystem 10 betreffen und die für den Benutzer ein optimales Smart-Indoor-Gardening-Erlebnis garantieren. Hierzu ist auf dem Smartphone 164 bevorzugt eine spezielle, so genannte "Smart-Indoor-Gardening"-Applikation 166 installiert. Weiterhin ist in die Elektronikeinheit 130 hier lediglich beispielhaft eine Bedieneinheit 146 mit einer Taste 148 und einer Anzeigeeinheit 150 integriert. Die Taste 148 kann beispielsweise mit einer feuchtigkeitsresistenten und gut zu reinigenden Folientaste und die Anzeigeeinheit 150 kann mit einer Digitalanzeige und/oder mit einer grafikfähigen Punkt-Matrixanzeige realisiert sein. Neben der hier lediglich exemplarisch eingezeichneten Taste 148 können weitere Tasten, Schalter, Drehschalter, Drehknöpfe und dergleichen an der Bedieneinheit 146 vorgesehen sein. Die Bedieneinheit 146 ist bevorzugt dazu ausgebildet, alle wesentlichen für ein optimales Wachstum der heranzuziehenden Pflanzen relevanten Parameter des Pflanzenkultivierungssystems 10 möglichst auch unabhängig von dem externen Mobilgerät 162 zu steuern bzw. zu regeln. Die hierbei einzustellenden Parameter, wie beispielsweise die Beleuchtungsdauer, die Beleuchtungszeit, die spektrale Zusammensetzung der Beleuchtung, die Bewässerungsintensität der heranzuziehenden Pflanzen etc., sind einem auf dem Gebiet von Pflanzenkultivierungssystemen bzw. der Pflanzenzucht tätigen Fachmann hinreichend geläufig, sodass an dieser Stelle zwecks Kürze und Knappheit der Beschreibung auf eine eingehende Erläuterung der detaillierten Parameter verzichtet sei.

Zwischen der Dockingstation 60 und dem Bewässerungsgefäß 14 besteht im auf die Dockingstation 60 aufgesetzten Zustand des Bewässerungsgefäßes 14 erfindungsgemäß eine hier nicht dargestellte drahtlose Verbindung, die bevorzugt mit einer induktiven Kopplung realisiert ist (vgl. Fig. 3). Mithilfe dieser induktiven Kopplung kann die Pumpeinheit des Bewässerungsgefäßes 14 mit der betriebsnotwendigen elektrische Energie versorgt und zugleich nach den Vorgaben des Anwenders mit Hilfe der Elektronikeinheit 130 bzw. des Smartphones 164 gesteuert und/oder geregelt werden. Die Versorgung der unterseitig an dem Deckelelement 70 angeordneten Lampe 72 erfolgt hingegen drahtgebunden, das heißt direkt über den ersten Abschnitt 132 der elektrischen Anschlussleitung 120 über das Netzteil 140 der Bedieneinheit 130. Zusätzlich zu der induktiven Kopplung kann eine optische Kopplung zwischen der Dockingstation 60 und der hier verdeckten Pumpeinheit vorgesehen sein, um beispielsweise Sensordaten eines der Pumpeinheit optional zugeordneten, hier nicht dargestellten, Sensorelements auf einfache Art und Weise mit der Elektronikeinheit 130 im Anschlusskabel 120 auszutauschen. Zu diesem Zweck kann der erste Leitungsabschnitt 132 mit einer Glasfaserleitung ausgestattet sein. Beispielsweise kann die Pumpeinheit mithilfe eines zugeordneten Sensorelements einen Füllstand des Bewässerungsgefäß 14 mit Wasser ermitteln und diesen mithilfe der optischen Kopplung auf die Dockingstation 60 übertragen, die ihrerseits die Sensordaten des Sensorelements über den ersten Abschnitt 132 der Anschlussleitung 120 an die Elektronikeinheit 130 zur weiteren Auswertung übermittelt. Die Sensordaten können dann zum Beispiel auf der Anzeigeeinheit 150 und/oder dem Smartphone 164 bei bestehender Funkverbindung 160 für den Anwender visualisiert werden. Alternativ oder ergänzend können Sensordaten eines der Pumpeinheit zugeordneten, optionalen Sensorelements auch über die induktive Kopplung auf die Dockingstation 60 übertragen und von dort über den ersten Leitungsabschnitts 132 mit der Elektronikeinheit 130 bidirektional ausgetauscht werden.

Durch die drahtlose, induktive Kopplung zwischen der Dockingstation 60 und dem Bewässerungsgefäß 14 lässt sich dieses, wie hier dargestellt, vom Anwender problemlos von der Dockingstation 60 abheben und zur Seite stellen. Anschließend können das Bewässerungsgefäß 14, die Schale 20 sowie der Kapselhalter 28 voneinander getrennt und nach dem Separieren der Pumpeinheit von dem Bewässerungsgefäß 14 und dem Herausnehmen der Kapseln mit dem Pflanzenzuchtsubstrat aus dem Kapselhalter 28 einer hygienischen und gründlichen Reinigung, beispielsweise in einer haushaltsüblichen Geschirrspülmaschine, unterzogen werden (vgl. Fig. 1). Darüber hinaus ermöglicht die induktive Kopplung zwischen der Dockingstation 60 und dem Bewässerungsgefäß 14 eine räumliche Trennung zwischen den wasserführenden Bauteilen des Pflanzenkultivierungssystems 10 wie dem Bewässerungsgefäß 14 und den elektrischen Komponenten, wie der Elektronikeinheit 130 und der Lampe 72 im Deckelelement 70. Die lösbar innerhalb des Bewässerungsgefäßes 14 angeordnete elektrische Pumpeinheit kann aufgrund der induktiven Kopplung in ein allseitig kontakt- und durchführungsfreies sowie vollständig isolierendes Gehäuse eingekapselt werden.

Die **Fig. 3** zeigt einen schematischen Längsschnitt des Pflanzenkultivierungssystems von Fig. 1 und 2 mit auf die Dockingstation aufgesetztem Bewässerungsgefäß.

Das Bewässerungsgefäß 14 ist hier auf die Dockingstation 60 des Pflanzenkultivierungssystems 10 aufgesetzt. Das Bewässerungsgefäß 14 ist mit dem Blendrahmen 16 verbunden und zumindest teilweise mit Wasser 170 befüllt, das mit einer geeigneten, das Pflanzenwachstum fördernden Nährlösung versetzt ist. Ein Pegel P des Wassers 170 ist hierbei so bemessen, dass sich die Pumpeinheit 50 zumindest teilweise im Wasser 170 befindet und ein im Wesentlichen ebener Boden 172 des Bewässerungsgefäßes 14 vollständig bedeckt ist. In das Bewässerungsgefäß 14 ist seinerseits die Schale 20 mit dem radial auskragenden Rand 22 eingesetzt und in der Schale 20 ist der Kapselhalter 28 aufgenommen. Zwischen dem Kapselträger 28 und der Schale 20 verläuft der umlaufende Ringspalt 116.

In jeweils einer Ausnehmung 30, 32, 34 des Kapselhalters 28 ist eine Kapsel 180, 182, 184 aufgenommen. Die drei korbähnlichen, kegelstumpfförmigen sowie für das Wasser 170 durchlässigen Kapseln 180, 182, 184 sind jeweils zumindest teilweise mit einem erdähnlichen Pflanzenzuchtsubstrat 192 befüllt, so dass in jeder Kapsel 180, 182, 184 ausgehend von nicht dargestellten Samenkörnern bzw. Keimlingen im Pflanzenzuchtsubstrat Pflanzen 186, 188, 190 aufwachsen können. Die Pflanzen 186, 188, 190 können derselben Art oder auch verschiedenen Arten zugehörig sein. Die Kapseln 180, 182, 184 können jeweils mit demselben Pflanzenzuchtsubstrat 192 befüllt sein oder auch zumindest teilweise unterschiedliche Pflanzenzuchtsubstrate enthalten.

Das ovale Deckelelement 70 mit der Lampe 72, die mit den drei LED-Clustern 94, 96, 98 gebildet ist, ist an der mit dem einen Distanzstück 78 verlängerten Vertikalstütze 64 befestigt bzw. auf diese aufgesteckt. Die drei LED-Cluster 94, 96, 98 sind hierbei zwischen dem Deckelelement 70 und der lichtdurchlässigen Deckplatte 100 positioniert. Das von den LED-Clustern 94, 96, 98 emittierte Licht 110 bestrahlt jeweils individuell eine der heranzuziehenden Pflanzen 186, 188, 190. Hierbei lassen sich mittels der Elektronikeinheit (vgl. Fig. 2) vorzugsweise die Beleuchtungsparameter jedes LED-Clusters 94, 96, 98 selektiv einstellen, sodass sich auch für den Fall, dass die Pflanzen 186, 188, 190 unterschiedlichen Arten zugehörig sein sollten, stets optimale Wachstumsbedingungen mit dem Pflanzenkultivierungssystem 10 erzielen lassen. Für jeden LED-Cluster 94, 96, 98 lässt sich beispielsweise die Beleuchtungsdauer, die uhrzeitmäßige Beleuchtungszeit, die Beleuchtungsintensität bzw. die Beleuchtungsstärke, die spektrale Zusammensetzung des Lichts 110, eine pulsierende Ansteuerung etc. selektiv steuern und/oder regeln.

In das Deckelelement 70 können eine elektronische Kamera 198 und/oder mindestens ein Sensorelement 200 integriert sein. Ein Bild der digitalen elektronischen Kamera 198 von den Pflanzen 186, 188, 190 kann somit beispielsweise auf der Anzeigeeinheit der Elektronikeinheit und/oder auf dem Smartphone des Anwenders zur Wachstumskontrolle der Pflanzen 186, 188, 190 ausgegeben werden. Bei dem Sensorelement 200 kann es sich beispielsweise um einen Temperatursensor, einen Feuchtigkeitssensor, einen Abstandssensor bzw. einen Entfernungssensor etc. handeln, dessen Sensordaten an die Elektronikeinheit und/oder das Smartphone übermittelbar sind. Mittels eines Abstandssensors lässt sich zum Beispiel ein Abstand A zwischen der unterseitigen Deckplatte 100 des Deckelelements 70 und den Pflanzen 186, 188, 190 bestimmen. Hierdurch kann dem Anwender beispielsweise eine Nachricht automatisiert zur Anzeige gebracht werden, dass eine Höhenanpassung der Vertikalstütze 64 vonnöten ist, um weiterhin ein ungestörtes Höhenwachstum der heranzuziehenden Pflanzen 186, 188, 190 für optimale Ernteergebnisse zu gewährleisten.

Die Übertragung der Sensordaten und/oder der Bilddaten der Kamera 198 erfolgt bevorzugt mithilfe von elektrischen Leitungen, die innerhalb der Vertikalstütze 64 bis zu einer in die kontaktlose Dockingstation 60 integrierten ersten Kopplungseinheit 210 geführt sind. Die erste Kopplungseinheit 210 ist unter anderem dazu ausgebildet, die Bilddaten der optionalen Kamera 198 und/oder die Sensordaten des Sensorelements 200 über den ersten Abschnitt 132 der elektrischen Anschlussleitung 130 bis an die hier nicht gezeigte Elektronikeinheit zu übermitteln (vgl. Fig. 2). Innerhalb der Elektronikeinheit erfolgt dann die weitere Auswertung der Bilddaten und/oder der Sensordaten mittels der Datenverarbeitungseinheit und deren Visualisierung durch die Anzeigeeinheit und/oder das externe Mobilgerät des Anwenders. Die erste Kopplungseinheit 210 wirkt mit einer zweiten, bevorzugt unmittelbar in die Pumpeinheit 50 integrierten Kopplungseinheit 212 zur Schaffung einer drahtlosen Verbindung 214 berührungslos zusammen. Diese drahtlose Verbindung 214 ist bevorzugt als eine induktive Kopplung 216 ausgeführt. Die beiden Kopplungseinheiten 210, 212 sind bevorzugt mit nicht dargestellten magnetischen Spulen und weiteren aktiven und passiven elektronischen Komponenten bzw. Bauteilen gebildet. Die beiden Kopplungseinheiten 210, 212 sind bevorzugt in einem möglichst geringen räumlichen Abstand im auf die Dockingstation 60 aufgesetzten Zustand des Bewässerungsgefäßes 14 zueinander positioniert, um einen möglichst hohen Wirkungsgrad der Energieübertragung in Verbindung mit einer sicheren Datenübertragung zu gewährleisten.

Die automatisierte Bewässerung der hier lediglich exemplarisch drei Pflanzen 186, 188, 190 erfolgt mittels der elektrischen Pumpeinheit 50, die mit einer bevorzugt von einem Elektromotor M angetriebenen hydraulischen Pumpe 220 realisiert ist. Die Versorgung des Elektromotors M mit der notwendigen elektrischen Energie erfolgt ausgehend von dem Netzteil der Elektronikeinheit über den ersten Abschnitt 132 des Anschlusskabels 120 über die induktive Kopplung 216 zwischen den beiden Kopplungseinheiten 210, 212. Die Pumpeinheit 50 saugt das in dem Bewässerungsgefäß 14 stehende Wasser 170 über eine Saugleitung 218 an und fördert dieses über eine Druckleitung 222 bis in die Schale 20 und bewässert die in geringem Abstand oberhalb des Bodens 40 der Schale 20 endenden Kapseln 180, 182, 184. Das Wasser 170 infiltriert hierbei aufgrund von Kapillarkräften das in den Kapseln 180, 182, 184 befindliche Pflanzenzuchtsubstrat stets in ausreichendem Maße. Von dem Pflanzenzuchtsubstrat nicht aufgesaugtes bzw. nicht benötigtes oder überschüssiges Wasser 170 verbleibt in der Schale 20 und fließt von dort aufgrund der in Richtung des Pfeils 226 gerichteten bzw. wirkenden Schwerkraft durch die - der besseren zeichnerischen Übersicht halber nicht bezeichneten - Bodenöffnungen innerhalb des Bodens 40 der Schale 20 wieder in das Bewässerungsgefäß 14 zurück, so dass der Kreislauf erneut beginnen kann. Der Weg des Wassers 170 zwischen der Druckleitung 222 der Pumpeinheit 50, der Schale 20, den Bodenöffnungen sowie dem Bewässerungsgefäß 14 ist mit schwarzen, gestrichelten Pfeilen veranschaulicht. Die Druckleitung 222 der Pumpe 220 der Pumpeinheit 50 ist durch eine nicht bezeichnete Öffnung im Boden 40 der Schale 20 geführt und gegen diese Öffnung mittels eines gleichfalls nicht bezeichneten Dichtelements, wie zum Beispiel einem O-Ring oder dergleichen, abgedichtet.

Durch periodisches, von der Datenverarbeitungseinheit innerhalb der Elektronikeinheit kontrolliertes Bestromen der Pumpeinheit 50 lässt sich zum Beispiel eine genau geregelte bzw. gesteuerte Bewässerung der Kapseln 180, 182, 184 mit den darin in dem Pflanzenzuchtsubstrat 192 aufwachsenden Pflanzen 186, 188, 190 erreichen. Mittels einer Drehzahlregelung der Pumpeinheit 50 ist eine Volumenstromänderung der Bewässerung umsetzbar. Eine Übersättigung des Pflanzenzuchtsubstrats 192 mit Wasser 170, die zu einer Schimmelbildung führen könnte, wird dabei zuverlässig vermieden. Die Versorgung des Elektromotors M mit dem betriebsnotwendigen elektrischen Gleichstrom erfolgt mittels der durch die beiden Kopplungseinheiten 210, 212 geschaffenen induktiven Kopplung 216.

Bevorzugt erfolgt die Bewässerung der Pflanzen 186, 188, 190 mittels der Pumpeinheit 50 und deren Beleuchtung mit Hilfe der Lampe 72 ausgehend von der Keimphase bis hin zur Ernte der erwachsenen Pflanzen 186, 188, 190 vollautomatisiert durch eine entsprechende Steuerung und/oder Regelung mittels der Elektronikeinheit des Pflanzenkultivierungssystems 10, sodass bis auf das sporadische Nachfüllen des Bewässerungsgefäßes 14 im Normalfall keine Eingriffe des Anwenders vonnöten sind.

In der Pumpeinheit 50 kann ein weiteres Sensorelement 230 vorgesehen sein, das beispielsweise als ein Füllstandsmesser dient, um ein Trockenlaufen der Pumpeinheit 50 zu vermeiden und dem Anwender eine Nachricht zu übermitteln, dass ein zeitnahes Nachfüllen von Wasser 170 erforderlich ist. Ferner kann das Sensorelement 230 als ein Durchflussmengenmesser ausgeführt sein, um die Bewässerungsdauer und Bewässerungsintensität der Kapseln 180, 182, 184 mit den darin enthaltenen Pflanzen 186, 188, 190 weiter optimieren zu können. Die Sensordaten des Sensorelements 230 können mittels der induktiven Kopplung 216 ebenfalls in den ersten Abschnitt 132 des elektrischen Anschlusskabels 120 eingekoppelt und von dort bis in die Elektronikeinheit übertragen und mittels der Datenverarbeitungseinheit zur Steuerung und/oder Regelung der Pumpeinheit 50 und/oder der Lampe 72 verwendet werden.

Optional kann eine nicht dargestellte optische Kopplung zwischen der Pumpeinheit 50 und der Dockingstation 60 zur Übertragung von Sensordaten des Sensorelements 230 und der Elektronikeinheit 130 vorgesehen sein, die beispielsweise mittels Optokopplern und mit mindestens einem Lichtleiter im ersten Abschnitt 132 des Anschlusskabels 120 realisiert sein kann. Weiterhin kann ein Sensorelement, wie zum Beispiel ein Feuchtigkeitssensor etc., unmittelbar im Bereich der Kapseln 180, 182, 184 positioniert sein, dessen Messdaten bevorzugt drahtlos, z. B. mittels RFID-Technik an die zweite Kopplungseinheit 212, von dort über die induktive Kopplung 216 auf die erste Kopplungseinheit 210 übertragen werden und schließlich leitungsgebunden über den ersten Abschnitt 132 der Anschlussleitung 120 bis zur Elektronikeinheit gelangen (vgl. Fig. 2).

Die Pumpeinheit 50, die erste Kopplungseinheit 210, der Motor M, die Pumpe 220 sowie das optionale Sensorelement 230 sind vorzugsweise vollständig in ein wasserdichtes, bis auf den Wasserdurchlauf in Form der Saugleitung 218 und der Druckleitung 222 der Pumpe 220, hermetisch abgeschlossenes Gehäuse 236 eingekapselt.

Das Gehäuse 236 der Pumpeinheit 50 ist hierbei zum Beispiel mittels einer nicht dargestellten Bajonettverbindung, Schraubverbindung oder Magnetverbindung leicht lösbar mit dem Bewässerungsgefäß 14 verbindbar.

Aufgrund der induktiven Kopplung 216 kann das Gehäuse 236 vollständig kontaktfrei und bis auf den Wasserdurchlauf der Pumpeinheit 50 hermetisch dicht abgeschlossen und vollständig elektrisch isoliert ausgeführt sein.

### Bezugszeichenliste

- 10: Pflanzenkultivierungssystem

- 14: Bewässerungsgefäß
- 16: Blendrahmen (Bewässerungsgefäß)

- 20: Schale
- 22: radial auskragender Rand (Schale)

- 28: Kapselhalter
- 30: Ausnehmung
- 32: Ausnehmung
- 34: Ausnehmung

- 40: Boden (Schale)
- 42: Bodenöffnung (Schale)

- 50: elektrische Pumpeinheit (Bewässerungsgefäß)

- 60: kontaktlose Dockingstation
- 62: Längsseite
- 64: Vertikalstütze
- 66: freies Ende (Vertikalstütze)

- 70: Deckelelement
- 72: Lampe

- 78: Distanzstück
- 80: Distanzstück
- 82: Rückenelement
- 84: Rückenelement
- 86: Verkleidungselement
- 88: Verkleidungselement
- 94: LED-Cluster
- 96: LED-Cluster
- 98: LED-Cluster
- 100: unterseitige Deckplatte (Deckelelement)

- 110: Licht

- 114: Halterung (stationäre Montage)
- 116: Ringspalt (Kapselträger, Schale)

- 120: elektrisches Anschlusskabel
- 122: Stromnetz

- 130: Elektronikeinheit
- 132: erster Abschnitt (Anschlusskabel)
- 134: zweiter Abschnitt (Anschlusskabel)

- 140: Netzteil
- 142: Datenverarbeitungseinheit
- 144: Kommunikationseinheit
- 146: Bedieneinheit
- 148: Taste
- 150: Anzeigeeinheit

- 160: Funkverbindung
- 162: externes Mobilgerät
- 164: Smartphone
- 166: Applikation

- 170: Wasser mit Nährlösung
- 172: Boden (Bewässerungsgefäß)

- 180: Kapsel
- 182: Kapsel
- 184: Kapsel
- 186: Pflanze
- 188: Pflanze
- 190: Pflanze
- 192: Pflanzenzuchtsubstrat

- 198: elektronische Kamera (Deckelelement)
- 200: Sensorelement (Deckelelement)

- 210: erste Kopplungseinheit (Dockingstation)
- 212: zweite Kopplungseinheit (Pumpeinheit)
- 214: drahtlose Verbindung
- 216: induktive Kopplung
- 218: Saugleitung
- 220: Pumpe
- 222: Druckleitung

- 226: Pfeil (Schwerkraft)

- 230: Sensorelement

- 236: Gehäuse

- A: Abstand
- M: Elektromotor
- P: Pegel

## Patentansprüche

1. Pflanzenkultivierungssystem (10) umfassend mindestens eine Schale (20), einen Kapselhalter (28), Kapseln (180,182,184), eine kontaktlose Dockingstation (60) und mindestens ein Bewässerungsgefäß (14), wobei in dem Bewässerungsgefäß (14) die mindestens eine Schale (20) einsetzbar ist, wobei in der Schale (20) der Kapselhalter (28) aufnehmbar ist und der Kapselhalter (28) eine Vielzahl von Ausnehmungen (30, 32, 34) aufweist, in die jeweils eine Kapsel (180, 182, 184) mit einem Pflanzenzuchtsubstrat (192) einsetzbar ist und Wasser (170) schwerkraftbedingt durch mindestens eine Bodenöffnung (42) aus der Schale (20) selbsttätig in das Bewässerungsgefäß (14) zurückfließen kann, wobei mittels einer dem Bewässerungsgefäß (14) zugeordneten elektrischen Pumpeinheit (50) Wasser (170) aus dem Bewässerungsgefäß (14) in die Schale (20) zur Bewässerung der in den Ausnehmungen (30, 32, 34) eingesetzten Kapseln förderbar ist und das Bewässerungsgefäß (14) auf die kontaktlose Dockingstation (60) zur Versorgung der elektrischen Pumpeinheit (50) aufsetzbar ist und die Dockingstation (60) über ein Anschlusskabel (120) mit dem Stromnetz (122) verbindbar ist.

2. Pflanzenkultivierungssystem (10) nach Patentanspruch 1, **dadurch gekennzeichnet, dass** die elektrische Pumpeinheit (50) lösbar mit dem Bewässerungsgefäß (14) verbindbar ist.

3. Pflanzenkultivierungssystem (10) nach Patentanspruch 1 oder 2, **dadurch gekennzeichnet, dass** die Dockingstation (60) mit einer mit Hilfe von Distanzstücken (78, 80) höhenvariablen Vertikalstütze (64) verbindbar ist, an deren freien Ende (66) ein Deckelelement (70) mit mindestens einer Lampe (72) zur Beleuchtung der mindestens einen Kapsel (180, 182, 184) mit dem Pflanzenzuchtsubstrat (192) vorgesehen ist.

4. Pflanzenkultivierungssystem (10) nach Patentanspruch 3, **dadurch gekennzeichnet, dass** das Deckelelement (70) dazu eingerichtet ist, in einem zumindest teilweise auf die Schale (20) abgesenkten Zustand einen radial auskragenden Rand (22) der Schale (20) zumindest teilweise abzudecken oder zu überspannen.

5. Pflanzenkultivierungssystem (10) nach Patentanspruch 4, **dadurch gekennzeichnet, dass** zwischen dem radial auskragenden Rand (22) der Schale (20) und dem Kapselhalter (28) ein Ringspalt (116) verbleibt.

6. Pflanzenkultivierungssystem (10) nach einem der Patentansprüche 3 bis 5,
**dadurch gekennzeichnet, dass** das Anschlusskabel (120) mindestens eine Elektronikeinheit (130) aufweist, die zumindest zur Steuerung und/oder Regelung der Pumpeinheit (50) und der Lampe (72) ausgebildet ist.

7. Pflanzenkultivierungssystem (10) nach Patentanspruch 6, **dadurch gekennzeichnet, dass** die Elektronikeinheit (130) mindestens ein Netzteil (140) aufweist.

8. Pflanzenkultivierungssystem (10) nach Anspruch 6 oder 7, **dadurch gekennzeichnet, dass** die Elektronikeinheit (130) eine Datenverarbeitungseinheit (142) sowie mindestens eine Kommunikationseinheit (144) aufweist, die insbesondere zum drahtlosen Informationsaustausch mit einem externen Mobilgerät (162), wie einem Smartphone (164), Tablet oder dergleichen, ausgebildet ist.

9. Pflanzenkultivierungssystem (10) nach einem der Patentansprüche 6 bis 8, **dadurch gekennzeichnet, dass** zwischen der kontaktlosen Dockingstation (60) und dem Bewässerungsgefäß (14) im auf die Dockingstation (60) aufgesetzten Zustand des Bewässerungsgefäßes (14) eine bevorzugt drahtlose Verbindung (214) besteht.

10. Pflanzenkultivierungssystem (10) nach Patentanspruch 9, **dadurch gekennzeichnet, dass** die bevorzugt drahtlose Verbindung (214) mittels einer induktiven Kopplung (216) realisiert ist.

11. Pflanzenkultivierungssystem (10) nach einem der Patentansprüche 6 bis 10, **dadurch gekennzeichnet, dass** in die Elektronikeinheit (130) eine Bedieneinheit (146) integriert ist.

12. Pflanzenkultivierungssystem (10) nach einem der Patentansprüche 6 bis 11, **dadurch gekennzeichnet, dass** die Pumpeinheit (50) mindestens ein Sensorelement (230) aufweist, dessen Sensordaten mittels der induktiven Kopplung (216) und/oder einer optischen Kopplung zwischen dem Bewässerungsgefäß (14) und der Dockingstation (60) sowie eines ersten Abschnitts (132) des Anschlusskabels (120) an die Elektronikeinheit (130) übertragbar sind.

## Claims

1. Plant cultivation system (10) comprising at least one tray (20), a capsule holder (28), capsules (180, 182, 184), a contactless docking station (60) and at least one irrigation vessel (14), wherein the at least one tray (20) can be inserted in the irrigation vessel (14), wherein the capsule holder (28) can be received in the tray (20) and the capsule holder (28) has a plurality of cut-outs (30, 32, 34), into which a capsule (180, 182, 184) with a plant breeding substrate (192) can be inserted in each case and due to gravity water (170) can automatically flow back out of the tray (20) into the irrigation vessel (14) through at least one floor opening (42), wherein by means of an electric pump unit (50) assigned to the irrigation vessel (14), water (170) can be conveyed out of the irrigation vessel (14) into the tray (20) in order to irrigate the capsules inserted into the cut-outs (30, 32, 34) and the irrigation vessel (14) can be placed on the contactless docking station (60) in order to supply the electric pump unit (50) and the docking station (60) can be connected to the power supply (122) by way of a connection cable (120).

2. Plant cultivation system (10) according to claim 1, **characterised in that** the electric pump unit (50) can be connected detachably to the irrigation vessel (14).

3. Plant cultivation system (10) according to claim 1 or 2, **characterised in that** the docking station (60) can be connected to a height-variable vertical support (64) with the aid of spacer pieces (78, 80), at the free ends (66) of which a cover element (70) is provided with at least one lamp (72) for lighting the at least one capsule (180, 182, 184) with the plant breeding substrate (192).

4. Plant cultivation system (10) according to claim 3, **characterised in that** the cover element (70) is designed to at least partially cover or span a radially projecting edge (22) of the tray (20) in a state lowered at least partially onto the tray (20).

5. Plant cultivation system (10) according to claim 4, **characterised in that** an annular gap (116) remains between the radially projecting edge (22) of the tray (20) and the capsule holder (28).

6. Plant cultivation system (10) according to one of claims 3 to 5, **characterised in that** the connection cable (120) has at least one electronics unit (130), which is embodied at least to control and/or regulate the pump unit (50) and the lamp (72).

7. Plant cultivation system (10) according to claim 6, **characterised in that** the electronics unit (130) has at least one power supply (140).

8. Plant cultivation system (10) according to claim 6 or 7, **characterised in that** the electronics unit (130) has a data processing unit (142) and at least one communication unit (144), which is embodied in particular for the wireless exchange of information with an external mobile device (162), such as a smartphone (164), tablet or suchlike.

9. Plant cultivation system (10) according to one of claims 6 to 8, **characterised in that** a preferred wireless connection (214) exists between the contactless docking station (60) and the irrigation vessel (14) in the state of the irrigation vessel (14) placed on the docking station (60).

10. Plant cultivation system (10) according to claim 9, **characterised in that** the preferred wireless connection (214) is realised by means of an inductive coupling (216).

11. Plant cultivation system (10) according to one of claims 6 to 10, **characterised in that** a control unit (146) is integrated into the electronics unit (130).

12. Plant cultivation system (10) according to one of claims 6 to 11, **characterised in that** the pump unit (50) has at least one sensor element (230), the sensor data of which can be transmitted by means of the inductive coupling (216) and/or an optical coupling between the irrigation vessel (14) and the docking station (60) and a first section (132) of the connection cable (120) to the electronics unit (130).

## Revendications

1. Système de culture de plantes (10) comprenant au moins une coque (20), un porte-capsules (28), des capsules (180, 182, 184), une station d'accueil (60) sans contact et au moins un réservoir d'irrigation (14), dans lequel dans le réservoir d'irrigation (14) l'au moins une coque (20) peut être utilisée, dans lequel le porte-capsules (28) peut être reçu dans la coque (20) et le porte-capsules (28) présente une pluralité d'évidements (30, 32, 34) dans lesquels respectivement une capsule (180, 182, 184) peut être utilisée avec un substrat de culture de plantes (192) et de l'eau (170) peut refouler sous l'influence de la gravité à travers au moins une ouverture de fond (42) de manière autonome à partir de la coque (20) jusque dans le réservoir d'irrigation (14), dans lequel au moyen d'une unité de pompage électrique (50) associée au réservoir d'irrigation (14) de l'eau (170) peut être transportée du réservoir d'irrigation (14) dans la coque (20) pour l'irrigation des capsules utilisées dans les évidements (30, 32, 34) et le réservoir d'irrigation (14) peut être posé sur la station d'accueil (60) sans contact pour l'alimentation de l'unité de pompage électrique (50) et la station d'accueil (60) peut être reliée au réseau électrique (122) par l'intermédiaire d'un câble de raccordement (120).

2. Système de culture de plantes (10) selon la revendication 1, **caractérisé en ce que** l'unité de pompage électrique (50) peut être reliée de manière amovible au réservoir d'irrigation (14).

3. Système de culture de plantes (10) selon la revendication 1 ou 2, **caractérisé en ce que** la station d'accueil (60) peut être reliée à un support vertical (64) variable en hauteur à l'aide d'entretoises (78, 80), support au niveau des extrémités libres (66) duquel un élément de recouvrement (70) avec au moins une lampe (72) pour l'éclairage de l'au moins une capsule (180, 182, 184) est prévu avec le substrat de culture de plantes (192).

4. Système de culture de plantes (10) selon la revendication 3, **caractérisé en ce que** l'élément de recouvrement (70) est conçu pour recouvrir ou enjamber au moins partiellement un bord (22), faisant saillie radialement, de la coque (20) dans un état au moins partiellement abaissé sur la coque (20).

5. Système de culture de plantes (10) selon la revendication 4, **caractérisé en ce que**, entre le bord (22), faisant saillie radialement, de la coque (20) et le porte-capsules (28) il reste un espace annulaire (116).

6. Système de culture de plantes (10) selon l'une quelconque des revendications 3 à 5, **caractérisé en ce que** le câble de raccordement (120) présente au moins une unité électronique (130) qui est réalisée pour la commande et/ou le réglage de l'unité de pompage (50) et de la lampe (72).

7. Système de culture de plantes (10) selon la revendication 6, **caractérisé en ce que** l'unité électronique (130) présente au moins un bloc d'alimentation (140).

8. Système de culture de plantes (10) selon la revendication 6 ou 7, **caractérisé en ce que** l'unité électronique (130) présente une unité de traitement de données (142) ainsi qu'au moins une unité de communication (144) qui est réalisée en particulier pour l'échange d'informations sans fil avec un terminal mobile externe (162), comme un téléphone multifonctions (164), une tablette ou similaire.

9. Système de culture de plantes (10) selon l'une quelconque des revendications 6 à 8, **caractérisé en ce que**, entre la station d'accueil (60) sans contact et le réservoir d'irrigation (14) il existe une liaison (214) de préférence sans fil à l'état du réservoir d'irrigation (14) posé sur la station d'accueil (60).

10. Système de culture de plantes (10) selon la revendication 9, **caractérisé en ce que** la liaison (214) de préférence sans fil est réalisée au moyen d'un couplage inductif (216).

11. Système de culture de plantes (10) selon l'une quelconque des revendications 6 à 10, **caractérisé en ce que** dans l'unité électronique (130) est intégrée une unité de commande (146).

12. Système de culture de plantes (10) selon l'une quelconque des revendications 6 à 11, **caractérisé en ce que** l'unité de pompage (50) présente au moins un élément de détection (230) dont des données de détection peuvent être transmises à l'unité électronique (130) au moyen du couplage inductif (216) et/ou d'un couplage optique entre le réservoir d'irrigation (14) et la station d'accueil (60) ainsi que d'une première section (132) du câble de raccordement (120).
